# EUROPÄISCHE PATENTSCHRIFT

(11) **EP 2 539 671 B1**
(45) Veröffentlichungstag und Bekanntmachung des Hinweises auf die Patenterteilung: **09.04.2014**
(21) Anmeldenummer: 11705538.4
(22) Anmeldetag: 23.02.2011
(51) Int. Cl.: G01B 21/08, G01N 25/00, G05D 5/02

(54) **VERFAHREN UND VORRICHTUNG ZUR KONTROLLE DES AUFTRAGS EINER EINE FLÜCHTIGE VERBINDUNG ENTHALTENDEN FLÜSSIGKEIT AUF EINE OBERFLÄCHE**
METHOD AND DEVICE FOR CONTROLLING THE APPLICATION OF A LIQUID CONTAINING A VOLATILE COMPOUND TO A SURFACE
PROCÉDÉ ET DISPOSITIF POUR CONTRÔLER L'APPLICATION D'UN LIQUIDE CONTENANT UN COMPOSÉ VOLATIL SUR UNE SURFACE

(30) Priorität: 23.02.2010 DE 102010002249
(43) Veröffentlichungstag der Anmeldung: 02.01.2013
(73) Patentinhaber: Fraunhofer-Gesellschaft zur Förderung der angewandten Forschung e.V., 80686 München (DE)
(72) Erfinder: MEYER, Udo, 28777 Bremen (DE); SIEBEN, Marcel, 28203 Bremen (DE); DIECKHOFF, Stefan, 28865 Lilienthal (DE); NOESKE, Paul-Ludwig Michael, 28213 Bremen (DE); TORNOW, Christian, 28215 Bremen (DE); MARKUS, Susanne, 28203 Bremen (DE)
(74) Vertreter: Eisenführ Speiser
(86) Internationale Anmeldenummer: PCT/EP2011/052676
(87) Internationale Veröffentlichungsnummer: WO 2011/104271

(56) Entgegenhaltungen:
- EP-A1- 0 902 252
- DE-C1- 19 500 073

## Beschreibung

Die Erfindung betrifft ein Verfahren zur Kontrolle des Auftrags einer eine flüchtige Verbindung enthaltenden Flüssigkeit auf eine Oberfläche und Verfahren zum Verbessern des Auftrags einer eine flüchtige Verbindung enthaltenden Flüssigkeit auf eine Oberfläche. Die Erfindung betrifft ferner eine Vorrichtung umfassend eine Temperaturmesseinheit und eine Auswertungseinheit, die eingerichtet ist zur Durchführung eines der vorgenannten Verfahren. Sie betrifft außerdem die Verwendung einer Auswertungseinheit oder einer Temperaturmessvorrichtung in einem der vorgenannten Verfahren sowie die Verwendung eines bestimmten ermittelten Wertes zur Bestimmung einer Auftragsmenge pro Flächeneinheit.

In industriellen Klebeprozessen werden lösungsmittelhaltige Aktivatoren und Primer zur Erhöhung der adhäsiven Eigenschaften von Bauteiloberflächen eingesetzt. Desgleichen finden in einer Vielzahl von Beschichtungsprozessen wie zum Beispiel dem Lackieren lösungsmittelhaltige Beschichtungsmittel Anwendung. Während oder nach dem Auftrag sind diese Systeme häufig hochtransparent oder mit dem Untergrund farbidentisch. Zum Teil sind die aufgetragenen Schichten auch extrem dünn. Optisch lässt sich bei solchen Aufträgen nur sehr schwer erfassen, ob und in welcher Menge an einer bestimmten Stelle ein Auftrag erfolgte oder nicht. Dementsprechend besteht die Gefahr, dass unzureichend behandelte Bauteiloberflächen im weiteren Verlauf einer Prozesskette zu Ausschuss oder erst in Gebrauch zu Schadensfällen führen. Es besteht darüber hinaus die Gefahr, dass aufgrund von Bereichen der Beschichtung, die nicht eine Mindestqualität erreichen, die Verwendbarkeit, die Haltbarkeit oder der optische Eindruck der beschichteten Oberfläche verschlechtert ist.

Insbesondere bei komplexen und/oder sicherheitsrelevanten Bauteilen ist daher eine Qualitätskontrolle der entsprechenden Beschichtung notwendig. Sofern eine solche Kontrolle beispielsweise bei Verklebungen durch Belastungstests erfolgt, führt dies bei einer unzureichenden Beschichtung stets zu Ausschuss.

Daher wurden im Stand der Technik Systeme entwickelt, die eine Qualitätskontrolle schon beim Auftrag der entsprechenden Beschichtung gewährleisten sollen.

Ein Ansatz ist, dass beim Auftrag einer auszuhärtenden flüssigen Beschichtung sichergestellt wird, dass eine bestimmte Mindestmenge an Flüssigkeit verbraucht wird. Hierzu dienen Durchflussmesser an den Leitungen oder Füllstandsmesser an Vorratsbehältern an Füllstandssystem. Informationen über die tatsächliche Qualität, insbesondere die Gleichverteilungen des Auftrages, liefern diese Verfahren nicht.

Zum anderen werden hochtransparente lösungsmittelhaltige Systeme mit Hilfe von Farbstoffen oder Flurosenzmarkern sichtbar gemacht. Dieses Verfahren scheidet aber in vielen Fällen wie Verklebungen von transparenten Bauteilen (zum Beispiel Glas oder Plexiglas) aus. Dies gilt auch, wenn Ziel des Auftrages der Schutz einer Fläche ist, deren Optik nicht durch die aufgetragene Sicht beeinträchtigt werden soll.

Wie oben bereits angedeutet, wird in vielen Betrieben die Güte der Klebung über mechanische Prüfung und prozessbegleitender Proben, bzw. die stichprobenartige Prüfung von Bauteilen Überwacht. Auf die Güte des Auftrages kann hier nur nachträglich aus dem mechanischen Verhalten geschlossen werden, eine Korrektur ist häufig nicht mehr möglich.

Darüber hinaus existieren eine Reihe von Ansätzen, in denen die Dicke von aufgetragenen Schichten über den Brechungsindex bzw. über die Reflexionseigenschaften der Schichten bestimmt werden. In der Regel sind diese nur punktweise einzusetzen und setzen bei transparenten Medien Bauteile hoher optischer Güte voraus. Darüber hinaus sind sie bei sehr dünnen Schichten unzuverlässig. Entsprechende Ansätze sind zum Beispiel in den Dokumenten DE 10 2005 026 125 B, US 2006/003 096 A, DE 10 2004 021 447 A, DE 10 2004 005 246 A, US 2007/292 629 A, DE 44 23 288 A, EP 0 611 608 A, EP 0 314 012 A und EP 2 050 579 A offenbart.

Ein entsprechendes Reflexionssystem ist auch aus dem Abschlussbericht zum AiF-Vorhaben 13207N des Fraunhofer Wilhelm-Klauditz-Institutes Holzforschung und des Vereins für Technische Holzfragen zum Forschungsthema "Optimierung des Klebstoffauftrages auf MDF und Spanplatten mittels Thermosensorik", zu beziehen über den internationalen Verein für technische Holzfragen e.V., Biernroder Weg 54E, 38108 Braunschweig bekannt: Hier werden Leimschichten mittels einer Infrarotquelle bestrahlt und aus der Reflexion des Infarot *in situ* Rückschlüsse auf die jeweilige Beschichtungsqualität bezogen.

Den in den letzten beiden Absätzen besprochenen Verfahren ist gemeinsam, dass sie neben den weiter oben beschriebenen Nachteilen auch eine separate Strahlungsquelle erfordern, was einen zusätzlichen apparativen Aufwand bedeutet.

Aufgabe der vorliegenden Erfindung war es, ein Verfahren anzugeben, mittels dessen *in situ,* nicht-invasiv, mit möglichst geringem apparativen Aufwand und/oder zuverlässig quantifizierbar die Auftragsqualität einer eine flüchtige Verbindung enthaltenden Flüssigkeit auf eine Oberfläche zu kontrollieren.

Gelöst wird diese Aufgabe durch ein Verfahren gemäß Anspruch 1.

Eine flüchtige Verbindung in diesem Zusammenhang ist eine Verbindung, die unter den Auftragsbedingungen von einem anderen Aggregatszustand, bevorzugt dem flüssigen Aggregatszustand, in den gasförmigen Zustand übergeht. Bevorzugt ist eine solche flüchtige Verbindung ein Lösungsmittel. Selbstverständlich ist auch möglich, dass mehr als eine Spezies flüchtiger Verbindungen in der Flüssigkeit enthalten sind.

Das Bestimmen des Temperaturverlaufes nach Auftragen der Flüssigkeit beginnt bevorzugt unmittelbar nach Auftrag. In manchen Fällen ist dies nicht unmittelbar umsetzbar, da die Temperaturmessung durch die Auftragvorrichtung behindert sein kann. Grundsätzlich ist aber möglich, auch eine bestimmte Zeitspanne bis zum Bestimmungsbeginn des Temperaturverlaufes verstreichen zu lassen, sofern die verwendete Eichkurve unter den gleichen Ausgangsbedingungen, das heißt hier insbesondere unter Verwendung des gleichen Zeitintervalles zwischen tatsächlicher Auftragung und Beginn der Bestimmung des Temperaturverlaufes aufgenommen wurde.

Ein Messpunkt, an dem die Flüssigkeit aufgetragen worden sein soll, ist ein solcher Messpunkt, der im Zielfeld des Flüssigkeitsauftrages liegt. Das heißt, der Messpunkt ist ein Punkt auf der Oberfläche, auf die die eine flüchtige Verbindung enthaltenden Flüssigkeit aufgetragen werden soll. Diese Oberfläche kann z.B. die Oberfläche eines Bauteils sein. Da es sich beim erfindungsgemäßen Verfahren um ein Qualitätskontrollverfahren handelt, kann auch der Fall nicht ausgeschlossen werden, dass im Bereich des Messpunktes tatsächlich keine Flüssigkeit aufgetragen worden ist, obwohl es beabsichtigt war, dort Flüssigkeit aufzutragen.

Nach dem Auftrag verdunstet das Lösungsmittel. Ein Teil der zur Verdunstung benötigten Energie wird dem behandelten Bauteil entzogen. Daher kommt es zu einer Abkühlung der Bauteiloberfläche. Die Erfindung macht sich die Grundüberlegung zunutze, dass der Verdunstungs- oder auch Sublimierungsvorgang bei ausreichender Flüssigkeitsmenge in einen von den Umgebungsbedingungen (Druck, Temperatur) abhängigen Gleichgewichtszustand eintritt. In diesem Gleichgewichtszustand verdunstet eine konstante Menge der flüchtigen Verbindung pro Zeiteinheit, so dass die Temperatur im Wesentlichen konstant bleibt. Erst wenn die flüchtige Verbindung weitgehend in den gasförmigen Zustand übergegangen ist, kommt es wieder zu einem Temperaturanstieg, bei dem sich die Bauteiltemperatur der Umgebungstemperatur angleicht. Dieser Teil der Temperaturverlaufskurve stellt sich regelmäßig als eine asymptotische Annäherungskurve dar.

Da der Übergang der flüchtigen Verbindung in die Gasphase unmittelbar nach dem Auftrag beginnt, kommt es innerhalb kürzester Zeit nach dem Auftrag zu einer deutlichen Temperaturabnahme. Findet eine solche Temperaturabnahme nicht statt, so wurde im Bereich des jeweiligen Messpunktes keine Flüssigkeit aufgetragen. Für die Durchführung des erfindungsgemäßen Verfahrens ist es nicht erforderlich, bei der Bestimmung des Temperaturverlaufes den anfänglichen Temperaturabfall tatsächlich zu messen: Ob ein Auftrag stattgefunden hat oder nicht lässt sich leicht durch den Wert der Temperatur feststellen, bei der der Temperaturverlauf (wenigstens zeitweise) einen annähernd konstanten Wert annimmt: Liegt dieser Wert unter der Umgebungstemperatur (die selbstverständlich auch durch die Bauteiltemperatur und die Temperatur und der aufgetragenen Flüssigkeit bestimmt wird), so ist vom Vorliegen eines Verdunstungs- oder Sublimationsprozesses auszugehen. Das bedeutet, dass eine entsprechende Flüssigkeit am Messpunkt aufgetragen wurde. Liegt dagegen die Temperatur, bei der die Temperatur konstant ist, im Bereich der Umgebungstemperatur, so kann geschlossen werden, dass an dem jeweiligen Messpunkt kein Flüssigkeitsauftrag erfolgt ist.

Im Schritt c) wird eine Zeitspanne (Δ t) bestimmt. Diese Zeitspanne endet stets zu dem Zeitpunkt, ab dem die Temperatur im Wesentlichen konstant wieder zu steigen beginnt, bis der Wert der Umgebungstemperatur erreicht ist. Wie oben angedeutet beginnt die im Schritt c) bestimmte Zeitspanne idealerweise unmittelbar nach dem anfänglichen Temperaturabfall, also mit dem Zeitpunkt, ab dem die Temperatur im Messpunkt im Wesentlichen unverändert bleibt. Es ist aber auch möglich, die Zeitspanne zu einem späteren Zeitpunkt beginnen zu lassen, sofern i) zu diesem Zeitpunkt die Temperatur noch konstant ist (nach einer Temperaturabnahme) und ii) die verwendete Eichkurve ebenfalls auf Zeitspannen basiert, deren Anfangszeitpunkt den gleichen zeitlichen Abstand zum Auftrag der Flüssigkeit liegt, wie der Anfangspunkt der in Schritt c) bestimmten Zeitspanne.

Dem Fachmann ist im Zusammenhang mit dem Bestimmen der Zeitspanne gemäß Schritt c) klar, da eine faktische Konstanz der gemessenen Temperaturwerte in der Praxis - schon der Messungenauigkeiten wegen - nie exakt vorliegen kann. Im Zweifelsfall wird der Fachmann daher mathematische Methoden vorsehen, mittels derer solche Schwankungen herausgerechnet werden, so dass die zu betrachtende Temperaturkurve angepasst ist. Mit anderen Worten, der Fachmann wird im Zweifelsfall die Temperaturverlaufskurve einem Fitting unterwerfen. Geeignete Fitting-Verfahren sind in diesem Zusammenhang bevorzugt Algorithmen, die auf der Methode der Kleinsten Quadrate basieren. Beispiele hierfür sind der Levenberg-Marquardt Algorithmus oder der Gauss-Newton Algorithmus.

Die im Schritt d) eingesetzte Eichkurve wird bevorzugt dadurch ermittelt, dass analog zu der im Schritt c) durchzuführenden Messung (vergl. oben) für die eingesetzte Flüssigkeit Messwerte ermittelt werden, die für gegebene Mengen Flüssigkeit pro Flächeneinheit die Zeitspanne (Δ t) darstellen, während der die Temperatur konstant ist. Analog zu Schritt c) bedeutet, dass die Eichkurve für die eingesetzte Flüssigkeit und das zu beschichtende Oberflächenmaterial bestimmt wird unter möglichst ähnlichen, bevorzugt den gleichen Umgebungs- und Randbedingungen wie im später durchgeführten Schritt c), wobei lediglich die Auftragskonzentration der Flüssigkeit variiert wird. Letztendlich basiert die Eichkurve darauf, dass eine bestimmte Auftragskonzentration (Flüssigkeit pro Flächeneinheit) bei gegebenen Oberflächen- und Umgebungsbedingungen für einen bestimmten Zeitraum im Gleichgewicht mit der Umgebung ist, nämlich so lange, bis zumindest die am stärksten flüchtige Komponente der Flüssigkeit komplett in den Gaszustand übergegangen ist.

Dies bedeutet: Sofern mehr als eine flüchtige Verbindung in der aufzutragenden Flüssigkeit enthalten ist, kann dies dazu führen, dass es mehrere Bereiche in der Temperaturverlaufskurve gibt, in denen die Temperatur konstant ist. In einem solchen Falle wird die im Schritt c) bestimmte Zeitspanne bevorzugt als eine Zeitspanne festgelegt, die im Kurven-Plateau mit dem niedrigsten Temperaturwert liegt, bevorzugt als die Zeitspanne, die das Plateau mit diesem Temperaturwert in der Temperaturverlaufskurve komplett umfasst.

Der Vorteil des erfindungsgemäßen Verfahrens ist darin zu sehen, dass es möglich ist eine *in situ* Kontrolle in der Auftragsmenge auch quantitativ durchzuführen.

Bevorzugt ist ein erfindungsgemäßes Verfahren, bei dem die Bestimmung des Temperaturverlaufs auf Basis der Intensität der IR (Infrarot)-Emission am jeweiligen Messpunkt erfolgt. Dementsprechend erfolgt die Bestimmung des Temperaturverlaufs in dem erfindungsgemäßen Verfahren bevorzugt mittels eines IR-Sensors und/oder einer IR-Kamera. Vorzugsweise befindet sich bei der Ausführung des erfindungsgemäßen Verfahrens wenigstens ein IR-Sensor und/oder eine IR-Kamera in ortsfester Lage zu einem Bauteil, auf dessen Oberfläche die eine flüchtige Verbindung enthaltende Flüssigkeit aufgetragen wird.

Die IR-Emission bzw. die Änderung der IR-Emission wird durch einen IR-Sensor erfasst, wobei eine IR-Kamera als eine Anordnung einer Vielzahl von IR-Sensoren aufgefasst werden kann. In einer geeigneten Auswerteinheit wird die ermittelte IR-Emission bzw. die Emissionsveränderung ausgewertet und in Temperatur-Werte umgerechnet. Dabei kann das Ergebnis optisch angezeigt bzw. weiter bearbeitet werden. Im Falle der Messung der IR-Emission durch eine Infrarot-Kamera oder in Infrarot-Kamerasystem wird eine zweidimensionale Detektormatrix eingesetzt. Dabei wird im Regelfall jeder Detektor auf einen anderen Messpunkt / Messbereich ausgerichtet sein. Dadurch ist es möglich, dass im erfindungsgemäßen Verfahren die Schritte a) - d) jeweils an mehr als einem Messpunkt erfolgen, was erfindungsgemäß bevorzugt ist. Besonders bevorzugt ist in diesem Zusammenhang, dass die Messung auf Basis so vieler Messpunkte erfolgt, die repräsentativ über eine Fläche verteilt sind, so dass Aussagen über die Auftragequalität der gesamten Fläche gemacht werden können.

Verfahren nach Anspruch 2, wobei wenigstens ein IR-Sensor und/oder eine IR-Kamera sich in ortsfester Lage befindet zu einem Bauteil, auf dessen Oberfläche die eine flüchtige Verbindung enthaltende Flüssigkeit aufgetragen wird.

In der deutschen Patentschrift DE 195 00 073 C1 ist ein Verfahren zum Bestimmen der auf einer Flächeneinheit vorhandenen Menge eines Klebstoffes beschrieben, wobei bei diesem Verfahren die Temperaturbestimmung mittels IR-Thermografie erfolgt. In dieser Patentschrift gibt es aber keinerlei Hinweise darauf, dass neben punktuellen Temperaturmessungen Zeitspannen, wie im erfindungsgemäßen Verfahren vorgesehen, gemessen werden sollen. Damit ist zu erwarten, dass die gemäß die der DE 195 00 073 C1 ermittelten Werte verglichen mit denen im erfindungsgemäßen Verfahren ermittelten Werten sehr viel ungenauer sind. In der europäischen Patentanmeldung EP 0 902 252 A1 wird ein Verfahren zur Erzeugung eines Signals in Abhängigkeit von der Dicke eines Flüssigkeitsfilms auf einer Fläche offenbart, wobei mittels einer Heiz- bzw. Kühlanordnung ein Teil des Flüssigkeitsfilms erwärmt bzw. abgekühlt wird, durch eine Temperaturmessanordnung die Zu- bzw. Abnahme der Temperatur des erwärmten bzw. gekühlten Teils des Flüssigkeitsfilms ermittelt wird, und durch eine Auswerteinrichtung der Zu- bzw. Abnahme der Temperatur ein Wert für die Dicke des Flüssigkeitsfilmes zugeordnet und als Signal ausgegeben wird. Ebenso wird eine Vorrichtung zur Erzeugung eines Signals in Abhängigkeit von der Dicke eines Flüssigkeitsfilms auf einer Fläche offenbart, umfassend eine Heiz- bzw. Kühlanordnung zur Erwärmung bzw. Abkühlung eines Teils des Flüssigkeitsfilms, eine Temperaturmessanordnung zur Ermittlung der Temperatur des von der Heiz- bzw. Kühlanordnung erwärmbaren bzw. abkühlbaren Flüssigkeitsfilmes, und eine Steuer- und Auswerteinrichtung zur Steuerung der Heiz- bzw. Kühlanordnung und der Temperaturmessanordnung sowie zur Auswertung der Signale der Temperaturmessanordnung, wobei der gemessenen Zu- bzw. Abnahme der Temperatur eine Dicke des Flüssigkeitsfilmes zugeordnet und als Signal ausgegeben wird. Der im beschriebenen Verfahren der EP 0 902 252 A1 zu beobachtende Temperaturverlauf umfasst die Annäherung an eine asymptotische Temperatur T_{A}, d.h. eine annähernd konstante Temperatur, im Ergebnis einer Erwärmung oder Abkühlung. Im Gegensatz zum Verfahren der vorliegenden Erfindung wird bei Verfahren der EP 0 902 252 A1 jedoch nicht die Zeitspanne, innerhalb derer die Temperatur im Messpunkt nach einer Abkühlung konstant ist, zur Bestimmung der Dicke des Flüssigkeitsfilms benutzt, sondern der zeitliche Temperaturverlauf bis zum Erreichen der asymptotischen (d.h. nahezu konstanten) Temperatur. Die Schritte c) und d) des Verfahrens der vorliegenden Erfindung beschreibt die EP 0 902 252 A1 jedoch nicht. Ebenso wird eine Heizungsanordnung bzw. eine Kühlanordnung wie bei der EP 0 902 252 A1, durch die ein Teil der Flüssigkeit des Flüssigkeitsfilmes erwärmt bzw. abgekühlt wird, gemäß vorliegender Erfindung nicht benötigt.

Bevorzugt ist ein erfindungsgemäßes Verfahren, wobei die Schritte b) - d) im Anspruch 1 mittels einer Auswertungseinheit erfolgen und diese ein Signal ausgibt, das einen Informationsgehalt über die Menge der an dem Messpunkt oder an den Messpunkten aufgetragenen Flüssigkeit pro Flächeneinheit enthält.

In der Auswertungseinheit, bevorzugt einer Recheneinheit, die über eine entsprechende Programmierung verfügt, wird das pro Messpunkt ermittelte Δt zuvor erstellten Eichkurve abgeglichen. Dabei kann das von der Auswertungseinheit ausgegebene Signal optisch (zum Beispiel in Form einer Warnlampe oder auf einem Bildschirm) sein. Es besteht aber zum Beispiel auch die Möglichkeit eines akustischen Signales. Ein solches akustisches Signal könnte zum Beispiel ein Warnsignal sein, wenn ein Qualitätsstandard unterschritten ist. Der Mindestinformationsgehalt über die Menge der am Messpunkt oder an den Messpunkten aufgetragenen Flüssigkeiten pro Flächeneinheit ist somit bevorzugt eine Information, ob ein vorher festgelegter Qualitätsstandard eingehalten wurde oder nicht. Grundsätzlich ist es aber auch möglich und auch erfindungsgemäß bevorzugt, dass das ausgegebene Signal Informationen über die tatsächliche Menge an Flüssigkeit pro Messpunkt enthält. Dementsprechend kann das Signal zum Beispiel in der Angabe von absoluten Werten (Flüssigkeitsvolumen pro Flächeneinheit) für jeden oder repräsentative Messpunkte bestehen, es ist aber auch möglich auf Basis von repräsentativen Messpunkten zum Beispiel ein Falschfarbenbild der gesamten beschichteten Fläche als Signal auszugeben, wobei die verschiedenen Farben jeweils bestimmten Auftragskonzentrationen zugeordnet sind.

Bestandteil der Erfindung ist auch ein Verfahren zum Verbessern des Auftrags einer eine flüchtige Verbindung enthaltenden Flüssigkeit auf eine Oberfläche, umfassend die Schritte:
a) Durchführen eines der vorstehend beschriebenen erfindungsgemäßen Verfahren,
b) Vergleichen der an jedem Messpunkt ermittelten aufgetragenen Menge mit einem Schwellenwert für die Auftragsmenge pro Flächeneinheit,
c) Durchführen einer Nachdosierung des Auftrags im Bereich des oder der Messpunkte, bei denen der Schwellenwert unterschritten ist.

Mittels des hier beschriebenen erfindungsgemäßen Verfahrens ist es möglich, schnell und *in situ* eine Auftragsverbesserung zu erzielen. Dabei kann das Verfahren sogar so ausgestaltet werden, dass die nachdosierte Menge an aufzutragender Flüssigkeit abhängig ist von der am jeweiligen Messpunkt bzw. im Bereich des jeweiligen Messpunkt gemessenen bereits aufgetragenen Menge. Die Nachdosierung kann zum Beispiel geschehen durch eine Kombination einer entsprechenden Auswertungseinheit mit einer (Nach-) Dosierungseinheit/Auftragseinheit.

Die erfindungsgemäßen Verfahren können beispielsweise und bevorzugt zur Überwachung des Aktivator- und Primerauftrages bei insbesondere industrieller Klebtechnik eingesetzt werden. Ein Beispiel hierfür ist das Scheibenkleben im Transportmittelbau. Ein weiteres ebenfalls bevorzugtes Einsatzgebiet ist die Überwachung von Reinigungsprozessen, bei denen gewährleistet werden soll, dass eine bestimmte Menge an Lösungsmittel aufgetragen wird. Ebenfalls bevorzugt sind Einsätze des erfindungsgemäßen Verfahrens bei der Kontrolle der Qualität in der Auftragung von Lackschichten, insbesondere dünner Lackschichten. Denkbar ist auch die Überwachung des Auftrages lösungsmittelhaltiger Holzschutzmittel. Durch den Einsatz des erfindungsgemäßen Verfahrens können färbende Zusätze für die farblosen Holzschutzmittel vermieden werden.

Wie oben angedeutet haben die erfindungsgemäßen Verfahren besonders in einer der bevorzugten Ausgestaltungsform den Vorteil, dass sie in Echtzeit die Lage und die Menge der aufgetragenen flüchtige Verbindungen enthaltenden Flüssigkeit bzw. von Flüssigkeitssystemen bestimmen können. Dementsprechend können unzureichend beschichtete Flächen bzw. Flächenteile direkt identifiziert und ggf. einer Nachbehandlung zugeführt werden. Gleichzeitig ist es möglich im Hinblick auf eine Qualitätssicherungsdokumentation für jedes Bauteil den Nachweis zu erbringen, dass die Flüssigkeit in gewünschter Menge und an der richtigen Stelle aufgetragen wurde. Ein weiterer Vorteil ist - wie bereits oben angedeutet - dass die aufzutragenden Systeme chemisch und optisch nicht verändert werden müssen. Dies ist insbesondere vorteilhaft für transparente und farbidentische Aufträge, die sich so zuverlässig nachweisen und quantifizieren lassen. Gegenüber optischen Verfahren, die auf Reflektionen basieren, besitzt das erfindungsgemäße Verfahren den Vorteil, sehr robust gegenüber Streulicht aus der Umgebung zu sein, was insbesondere beim Einsatz in industriellen Umgebungen sehr vorteilhaft ist. Darüber hinaus sind Anlagen mit IR-Detektoren / IR-Kameras hinsichtlich der technischen Komponenten verhältnismäßig preisgünstig fertigbar.

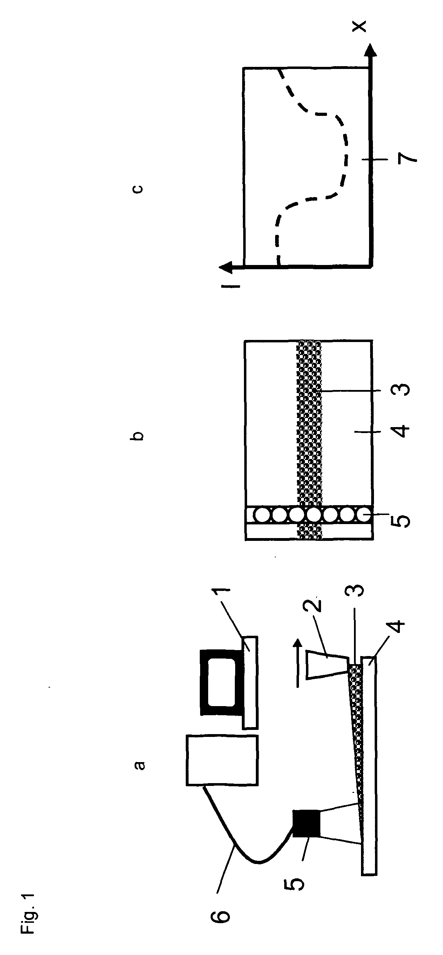

Bestandteil der Erfindung ist ferner eine Vorrichtung umfassend eine Temperaturmesseinheit bevorzugt auf Basis von IR-Messung und eine Auswertungseinheit, eigerichtet zur Durchführung eines erfindungsgemäßen Verfahrens. Ein Beispiel für eine solche Vorrichtung ist in der Fig. 1a schematisch dargestellt.

Eingerichtet zur Durchführung eines erfindungsgemäßen Verfahrens bedeutet, dass zumindest eine Auswertungseinheit vorhanden ist, mittels derer die Zeitspanne gemäß Schritt c) des erfindungsgemäßen Verfahren ermittelt werden kann und mittels der in Schritt d) aus der Zeitspanne auf Basis einer erstellten Eichkurve die Menge an den Messpunkt aufgetragene Flüssigkeit pro Flächeneinheit ermittelt werden kann. Bevorzugt ist eine solche Auswertungseinheit selbstverständlich ein Computer, der mit einer entsprechenden Software, ggf. umfassend Fitting-Algorithmen, ausgestattet ist.

Die Temperaturmesseinheit der erfindungsgemäßen Vorrichtung umfasst in einer bevorzugten Ausführungsform wenigstens einen IR-Sensor und/oder eine IR-Kamera Dabei ist die Vorrichtung vorzugsweise so ausgestaltet, dass wenigstens ein IR-Sensor und/oder eine IR-Kamera sich in ortsfester Lage befindet zu einem Bauteil, auf dessen Oberfläche die eine flüchtige Verbindung enthaltende Flüssigkeit aufgetragen wird.

Teil der Erfindung ist auch die Verwendung einer Auswertungseinheit oder einer Temperaturmessvorrichtung insbesondere umfassend einen IR-Sensor oder eine IR-Kamera in einem erfindungsgemäßen Verfahren.

Ebenfalls Teil der Erfindung ist eine Verwendung gemäß Anspruch 12.

Bei der letztgenannten Verwendung ist dem Fachmann klar, dass er über die genannte Zeitspanne in Kombination mit einer geeigneten Eichgrade (Eichkurve, siehe auch weiter oben) in der Lage ist, Rückschlüsse auf die Konzentration wenigstens einer flüchtigen Verbindung in der aufgetragenen Flüssigkeit im Bereich des jeweiligen Messpunktes zu erhalten. Sofern die Konzentration der flüchtigen Verbindung in der aufzutragenden Flüssigkeit bekannt ist, ist somit unmittelbar auf die tatsächliche Menge der aufgetragenen Flüssigkeit pro Flächeneinheit zu schließen.

Nachfolgend die Erfindung anhand von Figuren und eines Beispieles weiter erläutert:
- Fig. 1a: Stellt schematisch eine erfindungsgemäße Vorrichtung im Einsatz dar.
- Fig. 1b: Stellt eine teilbeschichtete Oberfläche dar.
- Fig. 1c: Stellt das Beispiel des zeitlichen Verlaufes eines Infrarot (IR-) Signal (gestrichelt) nach Auftrag einer entsprechenden Flüssigkeit dar.
- Fig. 2: Stellt ein Temperaturverlaufsprofil dar.
- Fig. 3: Stellt eine Eichkurve (Zeitspanne Verdunstungszeit) gegen Auftragsmenge dar.

Die Bezugszeichen bedeuten im Einzelnen:
- 1: Auswertungseinheit
- 2: Flüssigkeitsapplikator
- 3: Flüssigkeitsfilm, bei dem die flüchtige Verbindung in dem gasförmigen Zustand übergeht
- 4: Bauteil
- 5: IR-Kamera
- 6: Datenkabel
- 7: Beispiel des zeitlichen Verlaufes eines IR-Signales (gestrichelt).

Die in Fig. 1 dargestellte IR-Kamera 5 ist stationär vorgesehen und erfasst ein Feld von Messpunkten. Die Flüssigkeitsapplikationseinheit 2 wird in Pfeilrichtung über das Bauteil 4 bewegt. Dabei wird ein Flüssigkeitsfilm 3 aufgetragen, aus dem die flüchtigen Verbindungen oder die flüchtige Verbindung abdampft. In der Fig. 1b ist eine Aufsicht auf das Bauteil zu sehen. In Fig. 1c ist ein typischer Intensitätsverlauf 7 über die Zeit an einem bestimmten Messpunkt dargestellt. Hierbei ist zu erkennen, dass nach einem relativ steilen Abfall des Intensitätssignals, der eine Abkühlung kennzeichnet, eine Phase der Intensität feststellbar ist, die im Wesentlichen parallel zur t-Achse und somit unverändert ist. Hiemach kommt es wiederum zu einem Anstieg. Das Intensitätssignal wird über die Datenleitung 6 an die Auswertungseinheit 1 übermittelt. In der Auswertungseinheit wird die Breite des Minimums im Intensitätsverlaufs bestimmt und das sich daraus ergebende Δt zur Quantifizierung der Auftragsmenge benutzt, in dem mit einer zuvor eingegebenen Eichkurve abgeglichen wird. Es erfolgt eine Signalausgabe auf dem Bildschirm der Auswerteeinheit 1.

### Beispiel:

Quantifizierung eines Lösungsmittelauftrages durch punktweises Auswerten des zeitlichen Verlaufes der IR-Emission.

Das Lösungsmittel wird mittels Druckluft aus einem Vorratsbehälter zur einer Dosierdüse transportiert. Die Auftragsmenge wird durch die Dosieranlage eingestellt. Die Dosierdüse ist an einem Roboterarm befestigt. Der Roboterarm führt die Dosierdüse zum zu beschichtenden Bauteil und anschließend wird eine bestimmte Lösungsmittelmenge appliziert. Der Roboterarm bewegt sich wieder zurück in seine Ausgangsstellung. Eine IR-Kamera befindet sich in ortsfester Lage zum Bauteil und filmt während und nach dem Lösungsmittelauftrag die Bauteiloberfläche. Das Temperaturprofil an einem repräsentierenden Punkt auf der Bauteiloberfläche wird aufgezeichnet. Die Temperaturprofile weisen ein charakteristisches Plateau während der Verdunstung des Lösungsmittels auf. Eine Software bestimmt die Dauer der Verdunstung, und korreliert sie mit der Auftragsmenge.

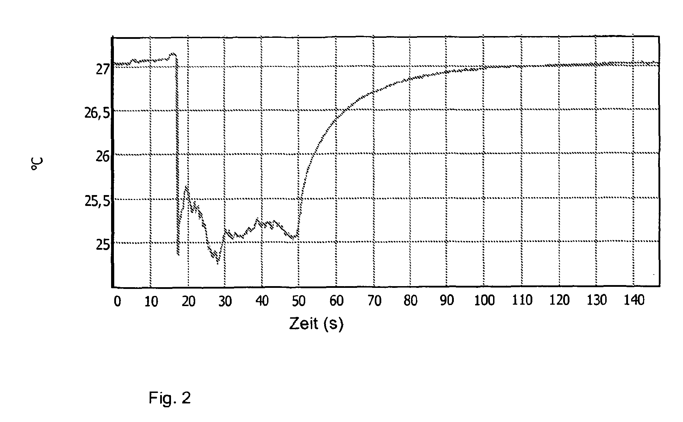

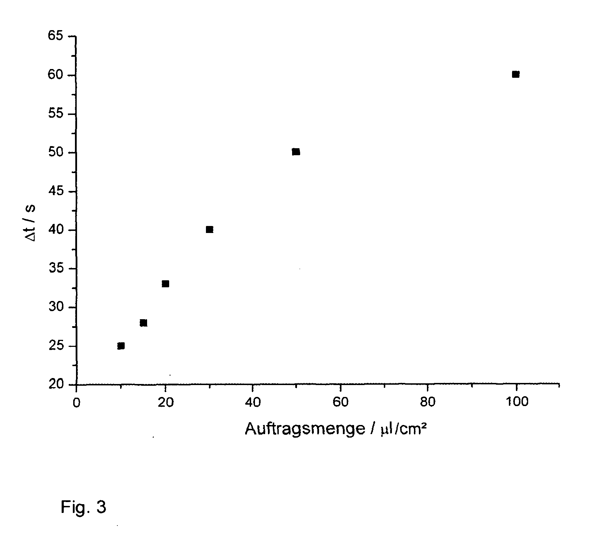

Im Beispiel besteht das Lösungsmittel aus Isopropanol, und die Oberfläche aus einer Glasscheibe, die mit Keramik-Siebdruck beschichtet ist. In Fig. 2 ist ein aus der gemessenen IR-Intensität errechnetes Temperaturprofil dargestellt. Deutlich sind die Verdunstungsphase (Plateau zwischen 18 s und 50 s) und die Rückerwärmungsphase (ab 50 s) zu trennen. In Fig. 3 sind die ermittelten Verdunstungszeiten gegen unterschiedliche Auftragsmengen aufgetragen (Eichkurve) dargestellt. Deutlich wird, dass es eine eindeutige Zuordnung von Auftragsmenge und Plateau-Zeit gibt.

Für den untersuchten Messpunkt wurde die Auftragsmenge von 19 µl/cm² ermittelt

## Patentansprüche

1. Verfahren zur Kontrolle des Auftrags einer eine flüchtige Verbindung enthaltenden Flüssigkeit auf eine Oberfläche, umfassend die Schritte:
a) Bestimmen des Temperaturverlaufes nach Auftragen der Flüssigkeit auf die Oberfläche an wenigstens einem Messpunkt, auf dem die Flüssigkeit aufgetragen worden sein soll,
b) Bestimmen eines Zeitpunktes, ab dem die Temperatur im Messpunkt nach einer Temperaturabnahme konstant ist,
c) Bestimmen der Zeitspanne ab diesem Zeitpunkt, in der die Temperatur im Messpunkt konstant ist, bis zu dem Zeitpunkt, ab dem die Temperatur im Wesentlichen konstant wieder zu steigen beginnt, und
d) Ermitteln der Menge der an dem Messpunkt aufgetragenen Flüssigkeit pro Flächeneinheit auf Basis der in Schritt c) ermittelten Zeitspanne mittels einer für diese Flüssigkeit erstellten Eichkurve.

2. Verfahren nach Anspruch 1, wobei die Bestimmung des Temperaturverlaufs mittels wenigstens eines IR-Sensors und/oder einer IR-Kamera erfolgt.

3. Verfahren nach Anspruch 2, wobei wenigstens ein IR-Sensor und/oder eine IR-Kamera sich in ortsfester Lage befindet zu einem Bauteil, auf dessen Oberfläche die eine flüchtige Verbindung enthaltende Flüssigkeit aufgetragen wird.

4. Verfahren nach einem der vorhergehenden Ansprüche , wobei die Schritte a) bis d) jeweils an mehr als einen Messpunkt erfolgen.

5. Verfahren nach einem der vorangehenden Ansprüche, wobei die Schritte b) bis d) mittels einer Auswertungseinheit erfolgen und diese ein Signal ausgibt, das einen Informationsgehalt über die Menge der an dem Messpunkt oder an den Messpunkten aufgetragenen Flüssigkeit pro Flächeneinheit enthält.

6. Verfahren zum Verbessern des Auftrags einer eine flüchtige Verbindung enthaltenden Flüssigkeit auf eine Oberfläche, umfassend die Schritte:
a) Durchführen eines Verfahrens nach einem der Ansprüche 1 bis 5,
b) Vergleichen der an jedem Messpunkt ermittelten aufgetragenen Menge mit einem Schwellenwert für die Auftragsmenge pro Flächeneinheit und
c) Durchführen einer Nachdosierung des Auftrags im Bereich des oder der Messpunkte, bei denen der Schwellenwert unterschritten ist.

7. Vorrichtung, umfassend eine Temperaturmesseinheit, bevorzugt auf Basis von IR-Messung, und eine Auswertungseinheit, eigerichtet zur Durchführung eines Verfahrens nach einem der vorangehenden Ansprüche.

8. Vorrichtung nach Anspruch 7, **dadurch gekennzeichnet, dass** die Recheneinheit über eine Programmierung verfügt zum Abgleichen der pro Messpunkt ermittelten Zeitspanne, in der nach Auftrag einer eine flüchtige Verbindung enthaltenden Flüssigkeit auf eine Oberfläche die Temperatur nach einer Temperaturabnahme konstant ist, mit einer Eichkurve.

9. Vorrichtung nach einem der Ansprüche 7 und 8, wobei die Temperaturmesseinheit wenigstens einen IR-Sensor und/oder eine IR-Kamera umfasst.

10. Vorrichtung nach Anspruch 9, wobei die Vorrichtung so ausgestaltet ist, dass wenigstens ein IR-Sensor und/oder eine IR-Kamera sich in ortsfester Lage befindet zu einem Bauteil, auf dessen Oberfläche die eine flüchtige Verbindung enthaltende Flüssigkeit aufgetragen wird.

11. Verwendung einer Auswertungseinheit oder einer Temperaturmessvorrichtung insbesondere umfassend einen IR-Sensor oder eine IR-Kamera in einem Verfahren nach einem der Ansprüche 1 bis 6.

12. Verwendung des Wertes der Zeitspanne, in der nach Auftrag einer eine flüchtige Verbindung enthaltenden Flüssigkeit auf eine Oberfläche die Temperatur in einem Messpunkt nach einer Temperaturabnahme konstant ist, zur Bestimmung der Auftragsmenge der Flussigkeit an dem Messpunkt pro Flächeneinheit mittels einer Eichkurve.

## Claims

1. A method for checking the application of a liquid containing a volatile compound to a surface, comprising the steps:
a) determining the temperature profile after application of the liquid to the surface at at least one measurement point to which the liquid is supposed to have been applied,
b) determining a time after which the temperature in the measurement point is constant after a reduction in temperature,
c) determining the time period after this time in which the temperature in the measurement point is constant, up to the time after which the temperature begins to increase substantially constantly again, and
d) establishing the amount of the liquid applied at the measurement point per unit of surface area on the basis of the time period established in step c) by means of a calibration curve drawn up for this liquid.

2. A method according to Claim 1, wherein the temperature profile is determined by means of at least an IR sensor and/or an IR camera.

3. A method according to Claim 2, wherein at least an IR sensor and/or an IR camera is in a fixed position relative to a component, to the surface of which the liquid containing a volatile compound is applied.

4. A method according to one of the preceding claims, wherein steps a) to d) take place in each case at more than one measurement point.

5. A method according to one of the preceding claims, wherein steps b) to d) take place by means of an evaluation unit and the latter emits a signal containing information content about the amount of the liquid applied at the measurement point or at the measurement points per unit of surface area.

6. A method for improving the application of a liquid containing a volatile compound to a surface, comprising the steps:
a) carrying out a method according to one of Claims 1 to 5,
b) comparing the amount applied which is established at each measurement point with a threshold value for the applied amount per unit of surface area, and
c) carrying out subsequent metering of the application in the region of the measurement point or points at which the value is below the threshold value.

7. A device, comprising a temperature-measurement unit, preferably on the basis of IR measurement, and an evaluation unit, set up to carry out a method according to one of the preceding claims.

8. A device according to Claim 7, **characterised in that** the processing unit has available programming to compare the time period determined per measurement point in which after the application of a liquid containing a volatile compound to a surface the temperature is constant after a reduction in temperature with a calibration curve.

9. A device according to one of Claims 7 and 8, wherein the temperature-measurement unit comprises at least an IR sensor and/or an IR camera.

10. A method according to Claim 9, wherein the device is configured such that at least an IR sensor and/or an IR camera is in a fixed position relative to a component, to the surface of which the liquid containing a volatile compound is applied.

11. Use of an evaluation unit or a temperature-measurement device in particular comprising an IR sensor or an IR camera in a method according to one of Claims 1 to 6.

12. Use of the value of the time period in which after application of a liquid containing a volatile compound to a surface the temperature is constant in a measurement point after a reduction in temperature to determine the applied amount of the liquid at the measurement point per unit of surface area by means of a calibration curve.

## Revendications

1. Un procédé pour contrôler l'application d'un liquide comportant une substance volatile, le dit procédé comportant les étapes suivantes :
a) la détermination de l'évolution de la température après application en au moins un point de mesure du liquide sur la surface où le dit liquide doit être appliqué,
b) la détermination d'un instant à partir duquel, après une baisse de température, la température au point de mesure est constante,
c) la détermination d'un intervalle de temps à partir de cet instant pendant lequel la température au point de mesure est constante, jusqu'à l'instant où la température recommence à monter de façon sensible et constante, et
d) le calcul de la quantité de liquide par unité de surface à appliquer au point de mesure, sur la base de l'intervalle de temps déterminé à l'étape c) et à l'aide d'une courbe d'étalonnage spécifique au dit liquide.

2. Un procédé selon la revendication 1, dans lequel l'évolution de la température est déterminée à l'aide d'au moins un capteur infrarouge et/ou une caméra infrarouge.

3. Un procédé selon la revendication 2, dans lequel au moins un capteur infrarouge et/ou une caméra infrarouge occupe une position stationnaire par rapport à un composant sur la surface duquel est appliqué un liquide comportant une substance volatile.

4. Un procédé selon l'une des revendications précédentes, dans lequel les étapes a) à d) sont effectuées en plusieurs points de mesure.

5. Un procédé selon l'une des revendications précédentes, dans lequel les étapes b) à d) sont effectuées à l'aide d'une unité d'évaluation, la dite unité d'évaluation émettant un signal qui comporte des informations sur la quantité de liquide appliquée au(x) point(x) de mesure.

6. Un procédé pour améliorer l'application d'un liquide comportant une substance volatile, le dit procédé comportant les étapes suivantes :
a) l'exécution d'un procédé selon l'une des revendications 1 à 5,
b) la comparaison des quantités à appliquer déterminées aux différents points de mesure avec valeur seuil de la quantité à appliquer par unité de surface, et
c) l'exécution d'une nouvelle application dans la zone du point ou des points de mesure où la valeur seuil n'est pas atteinte.

7. Un dispositif comportant une unité de mesure de la température sélectionnée sur la base d'une mesure infrarouge, ainsi qu'une unité d'évaluation, utilisable pour exécuter un procédé selon l'une des revendications précédentes.

8. Un dispositif selon la revendication 7, **caractérisé en ce que** l'unité informatique dispose d'un programme permettant de comparer à une courbe d'étalonnage les intervalles de temps déterminés pour les différents points de mesure pendant lesquels, après l'application sur une surface d'un liquide comportant une substance volatile, la température est constante après une baisse.

9. Un dispositif selon l'une des revendications 7 et 8, dans lequel l'unité de mesure de la température comporte au moins un capteur infrarouge et/ou une caméra infrarouge.

10. Un dispositif selon la revendication 9, configuré de façon à ce qu'au moins un capteur infrarouge et/ou une caméra infrarouge soit en position stationnaire par rapport à un composant sur la surface duquel est appliqué un liquide comportant une substance volatile.

11. L'utilisation d'une unité d'évaluation ou d'un dispositif de mesure de la température, comportant notamment un capteur infrarouge ou une caméra infrarouge, dans le cadre d'un procédé selon l'une des revendications 1 à 6.

12. L'utilisation de la valeur d'un intervalle de temps pendant lequel, après l'application sur une surface d'un liquide comportant une substance volatile, la température en un point de mesure est constante après une baisse, afin de déterminer à l'aide d'une courbe d'étalonnage la quantité de liquide par unité de surface à appliquer au point de mesure.
